# EUROPEAN PATENT SPECIFICATION

(11) **EP 2 057 775 B1**
(45) Date of publication and mention of the grant of the patent: **29.08.2012**
(21) Application number: 07796803.0
(22) Date of filing: 12.07.2007
(51) Int. Cl.: H04L 1/18

(54) **RELAY-ASSISTED HARQ TRANSMISSION SYSTEM**
RELAYUNTERSTÜTZTES HARQ-ÜBERTRAGUNGSSYSTEM
SYSTÈME DE TRANSMISSION HARQ ASSISTÉE PAR RELAIS

(30) Priority: 24.08.2006 US 839905 P; 02.07.2007 US 772295
(43) Date of publication of application: 13.05.2009
(73) Proprietor: Nokia Siemens Networks GmbH & Co. KG, 81541 München (DE)
(72) Inventor: CHINDAPOL, Aik, 20007 Washington DC (US); MILLICEVIC, Marija, 11000 Belgrade (RS)
(86) International application number: PCT/US2007/015850
(87) International publication number: WO 2008/024158

(56) References cited:
- WO-A-2004/002082
- HERHOLD P ET AL: "A simple cooperative extension to wireless relaying" COMMUNICATIONS, 2004 INTERNATIONAL ZURICH SEMINAR ON ZURICH, SWITZERLAND FEB.18-20, 2004, PISCATAWAY, NJ, USA,IEEE, 18 February 2004 (2004-02-18), pages 36-39, XP010697662 ISBN: 0-7803-8329-X

## Description

### TECHNICAL FIELD

This invention relates generally to relay assisted HARQ transmission systems and method.

### BACKGROUND

As is known in the art, the use of relays has been proven to be effective in transmitting data from the source to the destination where shadowing or large distance is a major concern.

Recently distributed channel coding has been proposed t o further increase the benefit of relaying by allowing a relay node to transmit partial codeword along with t h e direct transmission from the base station. See for example B Zhao and M. Valenti. Distributed turbo coded diversity for the relay channel. Electronic letters, 39:786; M.R.Souryal and B.R.Vojcic. Cooperative turbo coding with time-varying Rayleigh fading channels. Proc. IEEE ICC, pages 356-360, June 2004; and B.Zhao and M. Valenti. Practical relay networks: A generalization of Hybrid-ARQ, IEEE Journal on Selected Areas in Communications, 23(1):7-18, January 2005.

The main idea of distributed channel coding is that devices i n the network are able to cooperate in order to provide reliable communication. The destination receives better signal quality and achieves additional diversity by combining the information it receives from both source and relay. However conventional distributed channel coding schemes either require complex signaling for feedback between a relay node a n d the source or allow a relay node to forward erroneous information resulting in a performance loss.

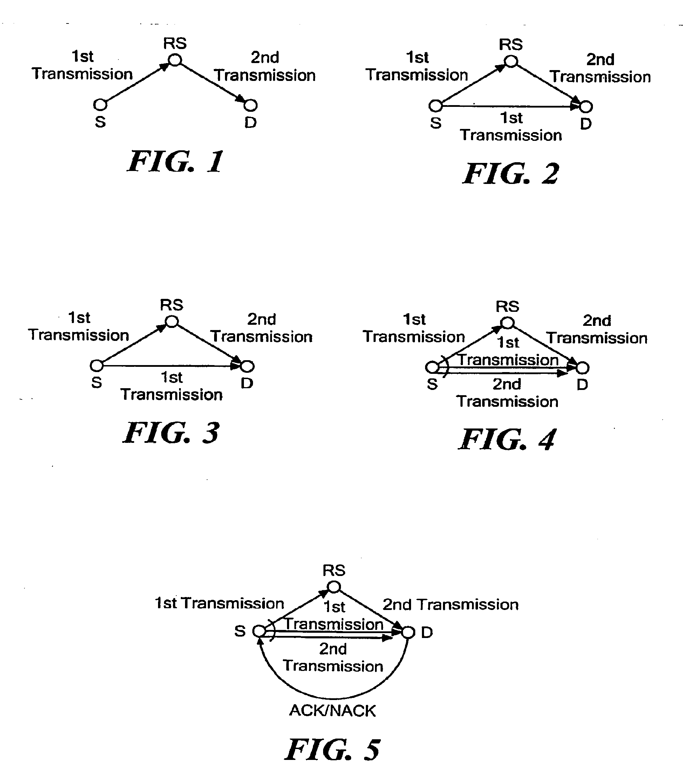

More particularly FIG. 1 shows a typical relay scenario wherein data that has to be sent from the source (S) to the destination (D) is relayed via Relay Station (RS) where a gain is obtained since the relay station (RS) has a better link quality than the direct link between the source (S) and the destination (D) and FIG. 2 shows a typical distributed channel coding scenario, wherein an additional direct link is also used between the source (S) and destination (D) is also used. Within distributed channel coding scenario, the source (S) sends data to both relay station (RS) and destination (D) as the first transmission. After receiving data the RS decodes a n d forwards data to the destination (D) as the second transmission. The relay station (RS) can decode received data from the source (S) correctly or incorrectly.

As is also known in the art, relay systems with feedback, such as shown in FIG. 3 have been suggested, see for example, Y. Cao and B. Vojcic. Cooperative Coding using Serial Concatenated Convolutional Codes. IEEE Communications Society/WCNC 2005. In the relay with the feedback scheme as shown in FIG. 3, the source (S) sends data to both relay station (RS) and destination (D) within the first transmission. After receiving the data from the source (S), the relay station (RS) attempt to decode the data from the source (S) and sends acknowledgment back to the source (S) about the success. In cases where the source (S) is also the base station (BS), the source (S) is also responsible for allocating resources for transmission. Otherwise, the base station (BS), which is a central entity that controls the transmissions between the source and the destination, is responsible for allocating resources for transmissions and notifying both the Source (S) and the Destination (D) of such allocations. At this point there are two possible scenarios: First, if the relay station (RS) decodes the first transmission from the source (S) and the source (S) receives an acknowledgement (ACK) from the relay station (RS), the base station (BS) will allocate resources for the relay station (RS) to forward information to the destination (D) ; and Second, if the relay station (RS) is unable to decode the data from the source(S) sent in the first transmission correctly, the relay station (RS) will send negative acknowledgment (NACK) and inform the source (S) that retransmission is needed. Therefore, the source (S) retransmits information related to the first transmission to both the relay station (RS) and destination (D). That is, the retransmitted information contains the same amount of information as the message in the first transmission but the representation used in the retransmission may be different from that used in the original transmission. Depending on the type of retransmission scheme, the source (S) may retransmit the same packet (HARQ-Chase Combining) or it may retransmit additional redundancy compared with first transmission from the source (S) to the destination (D) (HARQ-Incremental Redundancy). In order to accommodate feedback between the relay station (RS) and the source (S), the base station (BS) needs to allocate additional bandwidth for transmission of ACK messages a n d the relay station (RS) needs to process the data unit very quickly in order to send ACK in time.

The document "A simple cooperative extension to wireless relaying" from Herhold P et al, Communications, 2004 International Zurich Seminar on Zurich, Switzerland Feb. 18-20, 2004, 20040218; 20040218 - 20040220 Piscataway, NJ, USA,IEEE - ISBN 978-0-7803-8329-6 ; ISBN 0-7803-8329-X, XP010697662 describes a two-phase communication between a source and a destination including a relay, wherein the source must have information on the decoding status of the relay.

### SUMMARY

In accordance with the present invention, method is provided for transmitting data from a source to a destination. The method includes: transmitting the data from the source to both the destination and a relay station within a first transmission; decoding the data in the first transmission at both the relay station and the destination wherein the destination acknowledges success of the decoding by generating a ACK message or lack of success by generating either a NACK message or by failing to generate the ACK signal; retransmitting from the source information related to the first transmission in response to either the NACK message or the failure of the destination to generate the ACK message; and wherein when the relay station decodes the data sent by the source within the first transmission correctly, the relay station transmits the data in a second transmission when the source retransmits the information; or, on the other hand, if the relay station is unable to decode the data correctly from the first transmission sent by the source, the relay station remains silent.

The destination can be another relay station.

'In one embodiment, a method is provided for transmitting data from a source to a destination. The method includes: transmitting the data from the source to both the destination and a relay station within a first transmission; decoding the data in the first transmitting at both the relay station and the destination wherein the destination acknowledges success of the decoding by generating a ACK message or lack of success by generating either a NACK message or by failing to generate the ACK signal; retransmitting from the source, information related to the first transmission in response to either the NACK message or the failure of the destination to generate the ACK message; and wherein when the relay station decodes the data sent by the source within the first transmission correctly, the relay station transmits a second transmission simultaneously with the source; or, on the other hand, if the relay station is unable to decode the data correctly from the first transmission sent by the source, the relay station remains silent a n d listens again to the retransmission from the source to the destination .

In one embodiment, the method includes: transmitting the data from the source to both the destination and a plurality of relay stations within a first transmission; decoding the data in the first transmitting at both the plurality of relay stations and the destination wherein the destination acknowledges success of the decoding by generating a ACK message or lack of success by generating either a NACK message or by failing to generate the ACK signal; retransmitting from the source information related to the first transmission in response to either the NACK message or the failure of the destination to generate the ACK message; and wherein when at least one of the plurality of relay stations decodes the data sent by the source within the first t transmission correctly, such at least one of the relay stations transmits a second transmission; or, on the other hand, if said at least one of the relay stations is unable to decode the data correctly from the first transmission sent by the source, said at least one of the relay stations remains silent.

When more than one relay are involved, the source transmits the data to the destination and all participating relay stations. The destination and all relays decode the data in the first transmission. The destination determines whether the decoding was successful, and, if successful, acknowledges success of the decoding by generating a ACK message; on the other hand, if the decoding was not successful at the destination or the message was not received, the destination generates either an NACK message or fails to generate the ACK signal wherein the source retransmits information related to the first transmission. At each relay station, it determines whether it can decode the data sent by the source within the first transmission correctly. If decoded successfully, the relay station transmits a second transmission simultaneously with the source and other relays that receive the data correctly; on the other hand, if the relay station determines that it did not decode the data sent by the source within the first transmission correctly, the relay station remains silent and listens again to the retransmission from the source or other relays that receive the data correctly and transmit the data simultaneously to the destination given that relay station already knows what it needs to do because of the feedback link between the relay station and the source.

With such method, if the relay station is unable to decode the data from the source correctly and the data is not forwarded from the relay station to the destination, the destination will still receive the second transmission directly from the source. Furthermore, if the destination is still unable to decode data after retransmission from the source, the relay station can forward overheard data as a third transmission.

With such method, feedback channels are not required between a relay node and a source while still achieving similar performance as methods having feedback. This is achieved by having relays listen to the broadcast messages containing locations of allocated resources from the source (e.g., a base station (BS). Further, the method is transparent to the destination, meaning that the destination is unaware of a relayed transmission. Still further complexity is not introduced into existing HARQ systems, since the distributed channel coding can be inherently realized with the existing HARQ equipments.

More particularly, a method is provided for overcoming the impact of fading within a communication system with relays. The method uses relay-assisted HARQ transmission with distributed channel coding scheme in order to assure reliable communication between end nodes (i.e., source and destination); however, the method does not require additional bandwidth in the event that the relay station is unable to decode the data from the source. Furthermore, no complexity is introduced into the system, since the method is transparent to the destination in the sense that the destination is unaware that one transmission is being relayed and can be implemented within existing standard mechanisms such as HARQ without further complexity. That means, if the destination sends negative acknowledgment (NACK) to the source due to the erroneous decoding or not receiving a packet, the base station will implicitly organize joint second transmission from t h e relay station, or the plurality of relay stations and retransmission from the source to the destination.

The details of one or more embodiments of the invention are set forth in the accompanying drawings and the description below. Other features, objects, and advantages of the invention will be apparent from the description and drawings, and from the claims.

### DESCRIPTION OF DRAWINGS

FIG. 1 is a simple relaying system according to the PRIOR ART;
FIG. 2 is a typical distributed channel coding system according to the PRIOR ART;
FIG. 3 is a relay system with feedback according to the prior art;
FIG. 4 is Relay-Assisted HARQ transmission system with Distributed Channel Coding according to the invention;
FIG. 5 is a system having Joint distributed channel coding and direct retransmission from a base station according to the invention;
FIG. 6 is a structure of a first frame transmitted in the system of FIG. 5;
FIG, 7 is a structure of a second frame transmitted in the system of FIG, 5;
FIG. 8 is a flow chart of the operation of the Relay-Assisted HARQ transmission system with Distributed Channel Coding of FIG. 4 according to the invention;
FIG. 9 is a system according to an embodiment of the invention wherein a source (S) transmits a first transmission to destinations (D) and all participating Relay Stations (RS) and wherein two groups of the Relay Stations (RS) either participates in a second transmission or only listens to the second transmission.

Like reference symbols in the various drawings indicate like elements.

### DETAILED DESCRIPTION

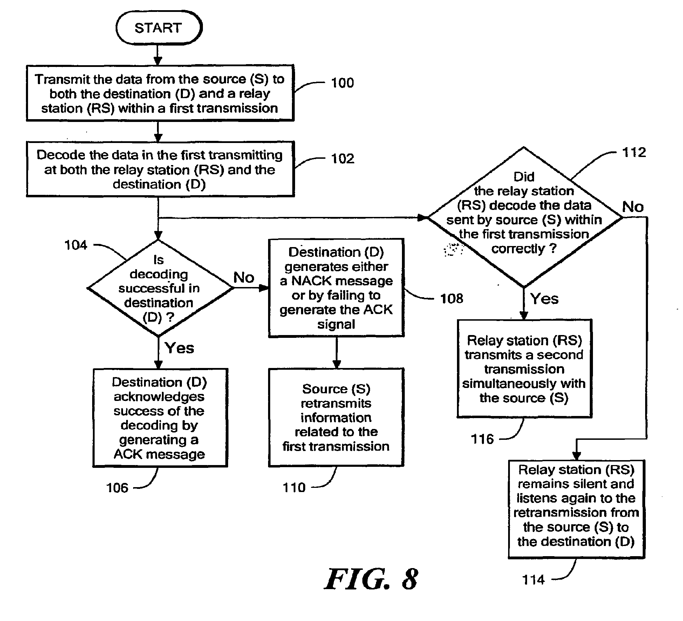

Referring now to FIGS. 4 and 8, a source (S), such as a base station, sends data to both relay station (R S ) and destination (D), such as a mobile station, within a first transmission. After receiving the data from the source (S), the relay station (RS) and the destination (D) attempt to decode the data and the destination (D) acknowledge success of the decoding. If the retransmission is needed, via NACK message or the lack of ACK, the source (S) retransmits information related to the first transmission. That is, the retransmitted information contains the same information as the message in the first transmission but the representation used in the retransmission may be different from that used in the original transmission. For the relay station (RS), there are two possible scenarios. First, if the relay station (RS) decodes the data sent by the source (S) within the first transmission correctly, it, the relay station, transmits the second transmission simultaneously with the source (S). Second, if the relay station (R S ) is unable to decode the data correctly from the first transmission send by the source (S), the relay station (RS) will remain silent a n d listens again to the retransmission from the source (S) to the destination (D). Therefore, if the relay station (RS) is unable to decode t h e data from the source (S) correctly and the data is not forwarded from the relay station (RS) to the destination (D), the destination (D) will still receive the second transmission directly from the source. In the first scenario, the source (S) and the base station (BS) do not expect any feedback from the relay station (RS) and the base station schedules retransmission assuming the destination (D) receives retransmission either from the source (S) or from both source (S) and relay station (RS) simultaneously. The relay station (RS) learns about the second transmission via either an explicit message from the base station or implicit information included in the first transmission. Furthermore, if the destination (D) is still unable to decode data after retransmission from the source (S), the relay station (RS) can forward overheard data as a third transmission.

Thus, as shown in FIG. 8, the system transmits the data from the base station to both the destination (D) and a relay stations (RS) within a first transmission, Step 100. Both the relay station (RS) and the source (S) decode the data in the first transmission, Step 102. At the destination (D): The destination (D) determines whether the decoding was successful, Step 104. If the decoding was successful, the destination (D) acknowledges success of the decoding by generating an ACK message, Step 106. On the other hand, if the decoding was not successful at the destination, the destination (D) generates either a NACK message or fails to generate the ACK signal, Step 108, and then the source (S) retransmits information related to the first transmission, Step 110.

At the relay station (RS): The relay station (RS) determines whether the relay station (RS) decodes the data sent by the source (S) within the first transmission correctly, Step 112. If it was decoded correctly within the first transmission, the relay station (RS) transmits a second transmission simultaneously with the source (S), Step 116. On the other hand, if the relay station (RS) determines that it, the relay station (RS) did not decode the data sent by the source (S) within the first transmission correctly, then it, the relay station, remains silent and listens again to the retransmission from the source (S) to the destination (D), Step 114.

In order to implement scenario of joint distributed channel coding and direct retransmission from the source (S), no additional complexity is introduced. First, the scenario a s shown in FIG. 5 could be implemented with HARQ mechanisms that already exist in many standards such as the IEEE 802.16 standard. That way, the protocol is transparent to the destination (D) since the destination (D) is unaware that one transmission i s being relayed. Furthermore, no complexity is introduced to the system since the acknowledgment process remains between the two end nodes, namely the source and the destination. That means, if the destination (D) sends negative acknowledgment (NACK) to the base station (BS) due to the erroneous decoding or not receiving a packet, the base station (BS) will organize joint second transmission from t h e relay station (RS) and retransmission from the source (S) to the destination (D).

When more than one relay station is involved, the source transmits the data to the destination and all participating relay stations. The destination and all relay stations decode the data in the first transmission. The destination determines whether the decoding was successful, and, if successful, acknowledges success of the decoding by generating a ACK message; on the other hand, if the decoding was not successful at the destination or the message was not received, the destination generates either an NACK message or fails to generate the ACK signal wherein the source retransmits information related to the first transmission. At each relay station, such relay station determines whether it can decode the data sent by the source within the first transmission correctly. If decoded successfully, the relay station transmits a second transmission simultaneously with the source and other relays that receive the data correctly; on the other hand, if the relay station determines that it did not decode the data sent by the source within the first transmission correctly, the relay station remains silent and listens again to the retransmission from the source or other relays that receive the data correctly and transmit the data simultaneously to the destination. The relay station may look for allocations of retransmissions from the source in order to either perform joint retransmission or listen to the retransmission without an explicit instruction from the base station.

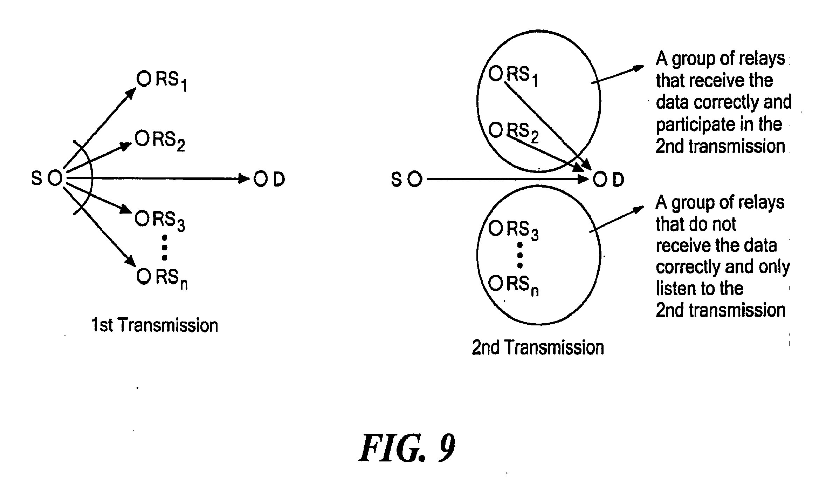

Referring now to FIG. 9 the source (S) transmits the first transmission, as shown in the left side portion of FIG. 9, to the destination (D) and all participating Relay Stations (RS) shown as RS₁, RS₂, RS₃, ..., RSₙ. After decoding the data, only a group of Relay Stations (RS) that are able to decode the message correctly transmit the data to the destination along with the Source (S) in the second transmission. All other relay stations that do not decode the message correctly do not transmit anything and listens to the second transmission from the Source (S) or other Relay Station (RS). The right hand side of FIG. 9 illustrates the two groups of Relay Stations that either participates in the second transmission or only listens to the second transmission. Given that it is possible that more than one station, the source and one or more relays, may participate in the second transmission, the Base Station (BS) may explicitly choose a subset of stations to participate in the second transmission.

Thus, here the method includes: transmitting the data from the source to both the destination and a plurality of relay stations within a first transmission; decoding the data in the first transmitting at both the plurality of relay stations and the destination wherein the destination acknowledges success of the decoding by generating a ACK message or lack of success by generating either a NACK message or by failing to generate the ACK signal; retransmitting from the source information related to the first transmission in response to either the NACK message or the failure of the destination to generate the ACK message; and wherein when at least one of the plurality of relay stations decodes the data sent by the source within the first transmission correctly, such at least one of the relay stations transmits a second transmission; or, on the other hand, if said at least one of the relay stations is unable to decode the data correctly from the first transmission sent by the source, said at least one of the relay stations remains silent.

It is noted that wherein when the relay station decodes the data sent by the source within the first transmission correctly, the relay station may transmits a second transmission simultaneously with the source. Further, if the relay station is unable to decode the data correctly from the first transmission sent by the source, the relay station remains silent and listens again to the retransmission from the source to the destination. Still further, one of the relay stations may be considered as a destination.

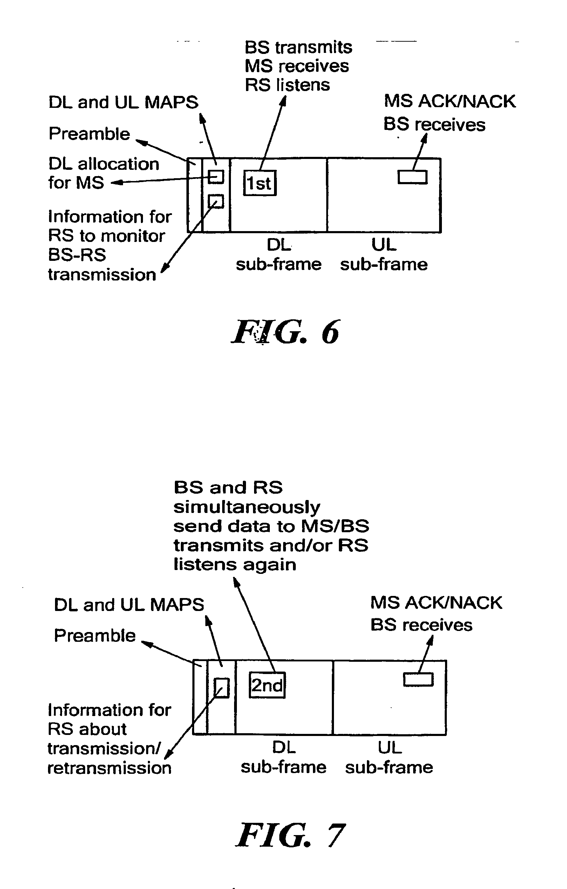

For better understanding, an example of the organization of proposed scheme as applied to the downlink of the IEEE 802.16 system, where the source (S) also performs the function of the base station (BS) and only one relay station (RS) participate in the relay-assisted HARQ transmissions, in timely manner is described in following paragraph. Depending on network configurations, the source (S) and the base station (BS) may be two different entities. The frame structure of the first time frame illustrating how the base station (BS) could allocate resources is shown in FIG. 6.
● The base station (BS) assigns downlink (DL) resources via DL MAP, which indicates the mapping of allocated resources from the source to the destination (D) or the plurality of destinations, and the base station (BS) inform the relay station (RS) to listen to particular transmission.
● The source (S) sends data to the destination (D) and instructs the relay station (RS) to listen for a particular transmission.
● The relay station (RS) and the destination (D) attempt to decode the data sent by the source (S).
● The destination (D) acknowledges success of decoding. The base station (BS) assigns resources for the destination (D) to transmit an acknowledgement via UL MAP, which indicates the mapping of allocated resources from the destination or the plurality of destinations to the source. It is to be noted that it is not necessary for the relay station (RS) to acknowledge transmissions.
● In the case that MS sends NACK to the source (S) due to erroneous decoding or fails to send ACK to the source (S) after not receiving data, and the relay station (RS) is able to correctly decode the data from the source (S), the relay station (RS) will retransmit data to the destination (D) simultaneously with the source (S) as shown in FIG. 7. In this case, the base station (BS) assigns DL resources via the DL MAP to the source (S) and instructs the relay station (RS) to retransmit correctly received data. The relay station (RS) may look for allocations of retransmissions from the source (S) and retransmit simultaneously without any explicit instructions from the source (S) or the base station (BS).
● In the case that destination (D) sends NACK to the source (S) or fails to send ACK to the source (S) after not receiving data, but the relay station (RS) is unable to decode data from the source (S) correctly, only the source (S) retransmits data to the destination (D) and the relay station (RS) remains silent and also listens to t h e retransmission from the source (S). In this case, the base station (BS) assigns DL resources via DL MAP to the source (S) and the destination (D). Although the relay station (RS) may be instructed to retransmit correctly received data, the relay station (RS) in this case ignores the instructions from the source (S), remains silent and listens to retransmission from the source (S) instead. The relay station (RS) may look for allocations of retransmissions from the source (S) and listen to the retransmission without any explicit instructions from the source (S) or the base station (BS).

Therefore, if the relay station (RS) is unable to decode the data from the source (S) correctly and the data is not forwarded from the relay station (RS) to the destination (D), the destination (D) still receives the second transmission directly from the source (S) . Furthermore, if the destination (D) is still unable to decode data after retransmission from the source (S), the relay station (RS) can forward overheard retransmission as a third transmission to the destination (D).

A number of embodiments of the invention have been described. Nevertheless, it will be understood that various modifications may be made without departing from the scope of the invention. Accordingly, other embodiments are within the scope of the following claims.

## Claims

1. A method for transmitting data from a source (S) to a destination (D), comprising:
transmitting the data from the source (S) to both the destination (D) and a relay station (RS) within a first transmission;
decoding the data in the first transmission at both the relay station (RS) and the destination (D) wherein the destination acknowledges success of the decoding by generating a ACK message or lack of success by generating either a NACK message or by failing to generate the ACK signal;
retransmitting from the source (S) information related to the first transmission in response to either the NACK message or the failure of the destination to generate the ACK message; and
wherein when the relay station (RS) decodes the data sent by the source (S) within the first transmission correctly, the relay station (RS) transmits the data ink a second transmission when the source retransmits the information; or, on the other hand, if the relay station (RS) is unable to decode the data correctly from the first transmission sent by the source (S), the relay station (RS) remains silent.

2. The method recited in claim 1 wherein the destination (D) is another relay station (RS).

3. The method recited in claims 1 or 2, wherein the relay station (RS) transmits the second transmission simultaneously with the source (S); and,
wherein if the relay station (RS) is unable to decode the data correctly from the first transmission sent by the source (S), the relay station (RS) listens again to the retransmission from the source (S) to the destination (D).

4. The method recited in one of claims 1 to 3, wherein the relay station (RS) is a plurality of relay stations (RSn), and
wherein when at least one of the plurality of relay stations (RSn) decodes the data sent by the source (S) within the first transmission correctly, such at least one of the relay stations (RSn) transmits a second transmission; or, on the other hand, if said at least one of the relay stations (RSn) is unable to decode the data correctly from the first transmission sent by the source (S), said at least one of the relay stations remains silent.

5. The method recited in claim 4 wherein the destination (D) is one of the plurality of relay stations (RS).

6. The method recited in one of claims 1 to 3 wherein the method further comprises:
at the destination (D):
determining whether the decoding was successful;
if successful, acknowledging success of the decoding by generating a ACK message;
on the other hand, if the decoding was not successful at the destination (D), generating either a NACK message or fail to generate the ACK signal wherein the source retransmits information related to the first transmission; and
at the relay station (RS):
determining whether the relay station (RS) decodes the data sent by the source (S) within the first transmission correctly;
if decoded successfully, transmitting a second transmission simultaneously with the retransmitted information related to the first transmission ;
on the other hand, if the relay station (RS) determines that the relay station (RS) did not decode the data sent by the source within the first transmission correctly, the relay station (RS) remains silent and listens again to the retransmission of the information related to the first transmission from the source to the destination (D).

## Patentansprüche

1. Verfahren zum Übertragen von Daten von einer Quelle (S) zu einem Ziel (D), das Folgendes umfasst:
Übertragen der Daten von der Quelle (S) sowohl zu dem Ziel (D) als auch zu einer Zwischenverstärkerstation (RS) in einer ersten Übertragung;
Decodieren der Daten in der ersten Übertragung sowohl in der Zwischenverstärkerstation (RS) als auch in dem Ziel (D), wobei das Ziel einen Erfolg der Decodierung durch das Erzeugen einer ACK-Nachricht bestätigt oder einen Nichterfolg entweder durch Erzeugen einer NACK-Nachricht oder durch Nichterzeugen des ACK-Signals bestätigt; und
erneutes Übertragen von Informationen, die die erste Übertragung betreffen, von der Quelle (S) entweder in Reaktion auf die NACK-Nachricht oder auf das Nichterzeugen der ACK-Nachricht durch das Ziel;
wobei die Zwischenverstärkerstation (RS) dann, wenn sie die von der Quelle (S) in der ersten Übertragung gesendeten Daten korrekt decodiert, die Daten in einer zweiten Übertragung überträgt, wenn die Quelle die Informationen erneut überträgt; oder wobei die Zwischenverstärkerstation (RS) dann, wenn sie dagegen nicht in der Lage ist, die von der Quelle (S) gesendeten Daten von der ersten Übertragung korrekt zu decodieren, stumm bleibt.

2. Verfahren nach Anspruch 1, wobei das Ziel (D) eine weitere Zwischenverstärkerstation (RS) ist.

3. Verfahren nach Anspruch 1 oder 2, wobei die Zwischenverstärkerstation (RS) die zweite Übertragung gleichzeitig mit der Quelle (S) überträgt; und
wobei die Zwischenverstärkerstation (RS) dann, wenn sie nicht in der Lage ist, die von der Quelle (S) gesendeten Daten von der ersten Übertragung korrekt zu decodieren, erneut auf die erneute Übertragung von der Quelle (S) zum Ziel (D) wartet.

4. Verfahren nach einem der Ansprüche 1 bis 3, wobei die Zwischenverstärkerstation (RS) mehrere Zwischenverstärkerstationen (RSn) enthält und
wobei dann, wenn wenigstens eine der mehreren Zwischenverstärkerstationen (RSn) die von der Quelle (S) in der ersten Übertragung gesendeten Daten korrekt decodiert, die wenigstens eine der Zwischenverstärkerstationen (RSn) eine zweite Übertragung überträgt; oder wenn dagegen die wenigstens eine der Zwischenverstärkerstationen (RSn) nicht in der Lage ist, die von der Quelle (S) gesendeten Daten von der ersten Übertragung korrekt zu decodieren, die wenigstens eine der Zwischenverstärkerstationen stumm bleibt.

5. Verfahren nach Anspruch 4, wobei das Ziel (D) eine der mehreren Zwischenverstärkerstationen (RS) ist.

6. Verfahren nach einem der Ansprüche 1 bis 3, wobei das Verfahren ferner Folgendes umfasst:
am Ziel (D):
Bestimmen, ob die Decodierung erfolgreich war;
wenn sie erfolgreich war, Bestätigen des Erfolgs der Decodierung durch Erzeugen einer ACK-Nachricht;
wenn die Decodierung am Ziel (D) dagegen nicht erfolgreich war, entweder Erzeugen einer NACK-Nachricht oder kein Erzeugen des ACK-Signals, wobei die Quelle Informationen, die die erste Übertragung betreffen, erneut überträgt; und
an der Zwischenverstärkerstation (RS):
Bestimmen, ob die Zwischenverstärkerstation (RS) die durch die Quelle (S) in der ersten Übertragung gesendeten Daten korrekt decodiert;
wenn erfolgreich decodiert worden ist, Übertragen einer zweiten Übertragung gleichzeitig mit den erneut übertragenen Informationen, die die erste Übertragung betreffen;
wenn die Zwischenverstärkerstation (RS) dagegen feststellt, dass sie die durch die Quelle in der ersten Übertragung gesendeten Daten nicht korrekt decodiert, bleibt sie stumm und wartet erneut auf die erneute Übertragung der Informationen, die die erste Übertragung betreffen, von der Quelle zum Ziel (D).

## Revendications

1. Un procédé de transmission de données d'une source (S) à une destination (D), comprenant :
la transmission des données de la source (S) à, à la fois, la destination (D) et à une station relais (RS) à l'intérieur d'une première transmission,
le décodage des données dans la première transmission sur à la fois la station relais (RS) et la destination (D) dans lequel la destination (D) confirme le succès du décodage par la génération d'un message ACK ou l'absence de succès par la génération de soit un message NACK ou en s'abstenant de générer le signal ACK,
la retransmission à partir de la source (S) d'informations relatives à la première transmission en réponse à soit le message NACK ou l'abstention par la destination de générer le message ACK, et
dans lequel, lorsque la station relais (RS) décode correctement les données envoyées par la source (S) à l'intérieur de la première transmission, la station relais (RS) transmet les données dans une deuxième transmission lorsque la source retransmet les informations, ou, à l'inverse, si la station relais (RS) est incapable de décoder correctement les données à partir de la première transmission envoyée par la source (S), la station relais (RS) reste silencieuse.

2. Le procédé selon la revendication 1, dans lequel la destination (D) est une autre station relais (RS).

3. Le procédé selon la revendication 1 ou 2, dans lequel la station relais (RS) transmet la deuxième transmission simultanément avec la source (S), et,
dans lequel, si la station relais (RS) est incapable de décoder correctement les données à partir de la première transmission envoyée par la source (S), la station relais (RS) écoute à nouveau la retransmission de la source (S) à la destination (D).

4. Le procédé selon l'une quelconque des revendications 1 à 3, où la station relais (RS) est une pluralité de stations relais (RSn), et
dans lequel, lorsqu'au moins une station de la pluralité de stations relais (RSn) décode correctement les données envoyées par la source (S) à l'intérieur de la première transmission, ladite au moins une station des stations relais (RSn) transmet une deuxième transmission, ou, à l'inverse, si ladite au moins une station des stations relais (RSn) est incapable de décoder correctement les données à partir de la première transmission envoyée par la source (S), ladite au moins une station des stations relais reste silencieuse.

5. Le procédé selon la revendication 4, dans lequel la destination (D) est une station de la pluralité de stations relais (RSn).

6. Le procédé selon l'une quelconque des revendications 1 à 3, dans lequel le procédé comprend en outre :
sur la destination (D) :
la détermination si le décodage a réussi,
s'il a réussi, la confirmation du succès du décodage par la génération d'un message ACK,
à l'inverse, si le décodage n'a pas réussi sur la destination (D),
la génération soit d'un message NACK ou l'absence de génération du signal ACK
dans lequel la source retransmet des informations relatives à la première transmission, et
sur la station relais (RS) :
la détermination si la station relais (RS) décode correctement les données envoyées par la source (S) à l'intérieur de la première transmission,
si le décodage a réussi, la transmission d'une deuxième transmission simultanément avec les informations retransmises relatives à la première transmission,
à l'inverse, si la station relais (RS) détermine que la station relais (RS) n'a pas décodé correctement les données envoyées par la source à l'intérieur de la première transmission, la station relais (RS) reste silencieuse et écoute à nouveau la retransmission des informations relatives à la première transmission de la source à la destination (D).
